(19) Europäisches Patentamt / European Patent Office / Office européen des brevets

(11) **EP 2 767 882 B1**

(12) **FASCICULE DE BREVET EUROPEEN**

(45) Date de publication et mention
de la délivrance du brevet:
**09.09.2015 Bulletin 2015/37**

(51) Int Cl.:
*G06F 1/16* *(2006.01)*     *G06F 3/01* *(2006.01)*

(21) Numéro de dépôt: **14154996.4**

(22) Date de dépôt: **13.02.2014**

(54) **Procédé de segmentation temporelle d'un geste instrumenté, dispositif, terminal et programme associés**

Zeitliches Segmentierungsverfahren einer instrumentierten Geste, entsprechende Vorrichtung, entsprechendes Endgerät und entsprechende Programm

Method for time segmentation of an instrumented gesture, related device, terminal and program

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2013 FR 1351320**

(43) Date de publication de la demande:
**20.08.2014 Bulletin 2014/34**

(73) Titulaire: **Orange**
**75015 Paris (FR)**

(72) Inventeurs:
• **Lefebvre, Grégoire**
  **38920 Crolles (FR)**
• **Roux, Sébastien**
  **38100 Grenoble (FR)**
• **Petit, Eric**
  **38400 St Martin D'Heres (FR)**

(56) Documents cités:
**DE-A1- 10 242 890     US-A1- 2007 113 207**

EP 2 767 882 B1

# Description

## 1. Domaine de l'invention

Le domaine de l'invention est celui des interactions gestuelles, et plus particulièrement de la segmentation temporelle d'un geste instrumenté formé dans l'espace par la trajectoire de la main d'un utilisateur portant un terminal.

## 2. Présentation de l'art antérieur

Le document US2007/113207 (17 mai 2007) décrit une procédé de segmentation temporelle d'un geste instrumenté en cours d'exécution par un utilisateur à l'aide d'un terminal équipé d'un module de navigation inertielle, apte à mesurer, pendant l'exécution du geste, un vecteur de caractéristiques inertielles V représentatif d'un mouvement dudit terminal.

Nous assistons ces dernières années à l'explosion des usages autour des interactions dites « naturelles ». L'utilisateur peut ainsi piloter son terminal ou un poste distant avec des gestes du quotidien pour accéder simplement et rapidement à une information ou à un service. Ces gestes peuvent être exécutés en 2D comme des dessins sur un écran tactile, interprétés comme une commande pour le système, ou bien exécutés en 3D, réalisés dans l'air tel un raccourci gestuel pour activer une fonctionnalité. Les gestes en 3D peuvent être interprétés par la capture du mouvement de son terminal mobile tenu en main grâce à des capteurs inertiels (accéléromètre, gyromètre, magnétomètre). Il convient alors de différencier ce qui est un geste, dans la capture du mouvement du terminal mobile, de ce qui n'est pas un geste en tant que tel. En effet, lorsque l'utilisateur a le terminal en main, il effectue des mouvements en continu avec ce dernier, souvent des mouvements de faibles amplitudes qui ne sont pas des gestes instrumentés en tant que tels, mais sont néanmoins capturés par l'accéléromètre, le gyromètre et le magnétomètre embarqués.

On connait par exemple une application de création de gestes instrumentés basés « accéléromètre », développée par la société Probayes. L'utilisateur doit saisir 3 instances de gestes 3D, attribuer un nom à cet ensemble de référence, puis définir l'action à exécuter lors de la segmentation de ce geste. La détermination de la portion utile du geste à reconnaitre se fait par l'appui sur un bouton de l'interface tactile, signifiant le début du geste, et la fin de geste s'opère dès relâchement du bouton.

## 3. Inconvénients de l'art antérieur

Un inconvénient de cette technique est qu'elle nécessite l'appui sur un bouton pendant l'exécution du geste. Cette contrainte est particulièrement gênante, puisque si l'utilisateur souhaite accéder rapidement à un service de son terminal par un geste dans l'air, il ne souhaite pas avoir une charge visuelle forte, nécessaire à la localisation du bouton puis à l'appui sur cette zone d'interaction. De plus, cet appui en continu sur le bouton pendant toute la durée du geste contraint l'utilisateur dans sa gestuelle, du fait qu'il doit garder un doigt collé sur l'interface. Répétée trop souvent, cette situation risquerait même de provoquer chez l'utilisateur des troubles musculo-squelettiques. De surcroit, cet appui est source d'erreur car l'utilisateur peut retirer son doigt trop tôt et seule la partie du signal segmentée par la période d'appui sur le bouton sera analysée pour la reconnaissance, ce qui aboutira à des confusions dans les gestes ou des rejets comme gestes invalides.

## 4. Exposé de l'invention

L'invention vient améliorer la situation à l'aide d'un procédé de segmentation temporelle d'un geste instrumenté en cours d'exécution par un utilisateur à l'aide d'un terminal équipé d'un module de navigation inertielle, apte à mesurer, pendant l'exécution du geste, un vecteur de caractéristiques inertielles représentatif d'un mouvement dudit terminal.
Un tel procédé est particulier en ce qu'il comprend les étapes suivantes, mises en oeuvre à chaque instant courant:

- calcul d'une valeur de puissance instantanée dudit vecteur à l'instant courant;
- estimation d'un indicateur de geste à partir d'une variation entre ladite valeur de puissance instantanée et une valeur de puissance moyenne estimée sur une fenêtre temporelle précédant l'instant courant ;
- détermination d'un premier instant, dit de début de geste, correspondant à l'instant courant, lorsque l'indicateur de geste estimé prend une valeur supérieure ou égale à un premier seuil prédéterminé pendant un intervalle de temps supérieur ou égal à un premier intervalle de temps prédéterminé ;
- suite à la détection d'un début de geste au premier instant courant, détermination d'un deuxième instant, dit de fin de geste lorsque, à l'instant courant, l'indicateur de geste estimé prend une valeur inférieure ou égale à un deuxième seuil prédéterminé pendant un intervalle de temps supérieur ou égal à un deuxième intervalle de temps prédéterminé.

Avec l'invention, l'utilisateur n'a plus à spécifier les instants de début et de fin de geste instrumenté à son terminal, par exemple en maintenant pressée une touche de l'interface pendant l'exécution du geste.

Au contraire, l'invention propose une segmentation temporelle automatique basée sur une estimation à la volée d'un indicateur de geste à partir des valeurs de puissances instantanées de ces caractéristiques inertielles calculées sur une fenêtre temporelle d'observation et sur une comparaison de cet indicateur estimé à un premier seuil représentatif d'un début de geste, puis, suite à la détection d'un début de geste, à un deuxième seuil représentatif d'une fin de geste.

Ainsi, l'invention repose sur une approche tout à fait nouvelle et inventive de la segmentation temporelle d'un geste instrumenté, qui exploite une estimation d'une variation de l'énergie produite par l'exécution du geste au cours du temps pour en déterminer précisément les instants de début et de fin.

L'invention permet ainsi de libérer l'utilisateur de la contrainte de maintenir pressée une touche de l'interface utilisateur de son terminal pendant l'exécution d'un geste instrumenté à l'aide de son terminal.

Selon un premier aspect de l'invention, le procédé de segmentation temporelle comprend une étape de décision positive de segmentation temporelle d'un geste, lorsque le premier et le deuxième instants courants sont distants d'un intervalle de temps supérieur à un troisième seuil prédéterminé.

On considère donc qu'un geste instrumenté est segmenté s'il est de durée suffisante. Ceci permet de rejeter des fausses alarmes.

Selon un deuxième aspect, l'étape d'estimation d'un indicateur de geste comprend l'estimation d'un premier estimateur de puissance moyenne des puissances instantanées sur ladite fenêtre, lesdites puissances instantanées étant pondérées selon une première pondération, l'estimation d'un deuxième estimateur de puissance moyenne des puissances instantanées sur ladite fenêtre, lesdites puissances instantanées étant pondérées selon une deuxième pondération et le calcul de l'indicateur de geste en fonction de la valeur absolue de la différence entre les valeurs estimées du premier et du deuxième estimateur.

Un avantage d'avoir recours à deux estimateurs est que cela permet de d'estimer de deux façons différentes l'énergie moyenne reçue par le module de navigation du terminal, en donnant plus ou moins de poids à la valeur courante et à l'historique.

Avantageusement, la deuxième pondération applique un poids plus élevé à la valeur de puissance instantanée calculée à l'instant courant que la première pondération.

Ainsi le premier estimateur a une longue mémoire et donne plus de poids aux valeurs de puissance passées, tandis que le deuxième estimateur favorise la nouvelle valeur de puissance instantanée. La valeur absolue de la différence entre les deux estimateurs met en évidence les variations importantes d'énergie reçues dans le temps, représentatives d'un geste en cours d'exécution.

Selon un autre aspect de l'invention, le premier et le deuxième estimateur sont calculés de façon récursive à partir de la valeur estimée à l'instant précédent et de la valeur de puissance instantanée calculée à l'instant courant.

Un avantage est que qu'elle que soit la taille de la fenêtre temporelle considérée, il n'est nécessaire de stocker en mémoire que les valeurs des premier et deuxième estimateurs de puissance à l'instant $t_n$-1 précédent et à l'instant courant. Le procédé de segmentation temporelle selon cet aspect de l'invention est donc très économe en mémoire de stockage.

Selon un autre aspect de l'invention, le procédé de segmentation temporelle comprend une étape d'initialisation de l'étape d'estimation de l'indicateur de geste, à un instant initial dont la valeur appartient au groupe comprenant :

- Un instant de mise sous tension de l'équipement terminal ;
- Un instant de lancement d'une application prédéterminée ;
- L'instant courant diminué d'une taille de fenêtre temporelle prédéterminée.

L'indicateur de geste fournit une valeur moyenne lissée dans le temps de la variation d'énergie libérée par l'exécution d'un geste instrumenté. La taille de la fenêtre temporelle $F[t_0,t_n]$ utilisée pour l'estimation de la puissance moyenne doit être suffisante pour éviter les fausses segmentations dues à des mouvements parasites du terminal. Plus la fenêtre considérée est grande, plus le procédé est robuste aux petits mouvements involontaires dus à une manipulation classique du terminal.

Selon encore un autre aspect, suite à la détermination d'un deuxième instant de fin de geste, il déclenche une étape de validation comprenant les sous-étapes suivantes de :

- calcul d'une mesure de variation inertielle entre les valeurs instantanées du vecteur de caractéristiques inertielles à l'instant courant et des valeurs moyennes estimées desdites caractéristiques sur une fenêtre temporelle précédant l'instant courant ;
- comparaison de la valeur de variation calculée à un seuil prédéterminé pendant un intervalle de temps prédéterminé;
- validation de l'instant de fin de geste déterminé lorsque la mesure M calculée est inférieure audit seuil au moins pendant l'intervalle de temps prédéterminé DM.

Cette étape additionnelle valide ou rejette l'instant de fin de geste déterminé, en prenant en compte une mesure de variation de la valeur réelle des caractéristiques inertielle faite composante par composante. Elle complète l'analyse énergétique faite à partir de l'estimation de puissance moyenne du vecteur de caractéristiques inertielles. Un avantage est qu'elle permet d'éviter des sur-segmentations dues à des chutes temporaires de l'énergie reçue par le module de navigation inertielle, pendant l'exécution du geste, du fait d'un ralentissement du mouvement produit par l'utilisateur.

Le procédé de segmentation temporelle qui vient d'être décrit dans ses différents modes de réalisations peut être mis en oeuvre par un dispositif de segmentation temporelle d'un geste instrumenté en cours d'exécution par un utilisateur à l'aide d'un terminal équipé d'un module de navigation inertielle, apte à mesurer, pendant l'exécution du geste, un vecteur de caractéristiques inertielles représentatives d'un mouvement dudit terminal.

Un tel dispositif est particulier en ce qu'il est apte à mettre en oeuvre les modules suivants :

- calcul (PI) d'une valeur de puissance instantanée dudit vecteur ($\vec{V}(t_n)$) à l'instant courant;
- estimation (CALC I) d'un indicateur de geste ($I(t_n)$) à partir d'une variation entre ladite valeur de puissance instantanée et une valeur de puissance moyenne estimée sur une fenêtre temporelle ($F(t_0, t_n)$) précédant l'instant courant ;
- détermination (DET $t_{n1}$) d'un premier instant ($t_{n1}$), dit de début de geste, correspondant à l'instant courant, lorsque l'indicateur de geste estimé prend une valeur supérieure ou égale à un premier seuil (SD) prédéterminé pendant un intervalle de temps supérieur ou égal à un premier intervalle (DD) prédéterminé ;
- suite à la détection d'un début de geste au premier instant courant ($t_{n1}$), détermination (DET $t_{n2}$) d'un deuxième instant ($t_{n2}$), dit de fin de geste lorsque, à l'instant courant, l'indicateur de geste estimé prend une valeur inférieure ou égale à un deuxième seuil (SF) prédéterminé pendant un intervalle de temps supérieur ou égal à un deuxième intervalle de temps (DF) prédéterminé.

L'invention concerne aussi un équipement terminal, équipé d'un module de navigation inertielle apte à mesurer, pendant l'exécution d'un geste, un vecteur de caractéristiques inertielles représentatif d'un mouvement dudit terminal, et comprenant le dispositif de segmentation temporelle qui vient d'être décrit.

L'invention concerne encore un programme d'ordinateur comportant des instructions pour la mise en oeuvre des étapes d'un procédé de segmentation temporelle tel que décrit précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

L'invention se rapporte enfin à un support de stockage, lisible par un processeur, intégré ou non au dispositif de segmentation temporelle selon l'invention, éventuellement amovible, mémorisant un programme d'ordinateur mettant en oeuvre un procédé de segmentation temporelle tel que décrit précédemment.

Les supports d'enregistrement mentionnés ci-avant peuvent être n'importe quelle entité ou dispositif capable de stocker le programme et lisible par un équipement terminal. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

## 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- les figures 1A, 1B, 1C et 1D présentent des exemples de gestes symboliques instrumentés;
- la figure 2 présente de façon schématique les éléments fonctionnels d'un système de traitement d'un geste instrumenté mettant en oeuvre l'invention ;
- la figure 3 présente de façon schématique les étapes d'un procédé de segmentation temporelle d'un geste instrumenté selon un premier mode de réalisation de l'invention ;
- la figure 4 présente un premier exemple de courbe d'évolution dans le temps de l'indicateur de geste estimé selon un premier mode de réalisation de l'invention ;
- la figure 5 présente de façon schématique les étapes d'un procédé de segmentation temporelle d'un geste instrumenté selon un deuxième mode de réalisation de l'invention ;
- la figure 6 présente un deuxième exemple de courbe d'évolution dans le temps de l'indicateur de geste estimé selon un deuxième mode de réalisation de l'invention pour un deuxième exemple de geste instrumenté; et
- la figure 7 décrit un exemple de structure matérielle d'un dispositif de segmentation temporelle de geste instrumenté selon l'invention.

## 6. Description d'un mode de réalisation particulier de l'invention

Le principe général de l'invention repose sur la segmentation temporelle automatique d'un geste instrumenté exécuté par un utilisateur à l'aide de son terminal. Cette segmentation temporelle s'appuie sur l'analyse en continu d'une variation de l'énergie contenue dans les signaux de caractéristiques inertielles captés par le module de navigation inertielle du terminal.

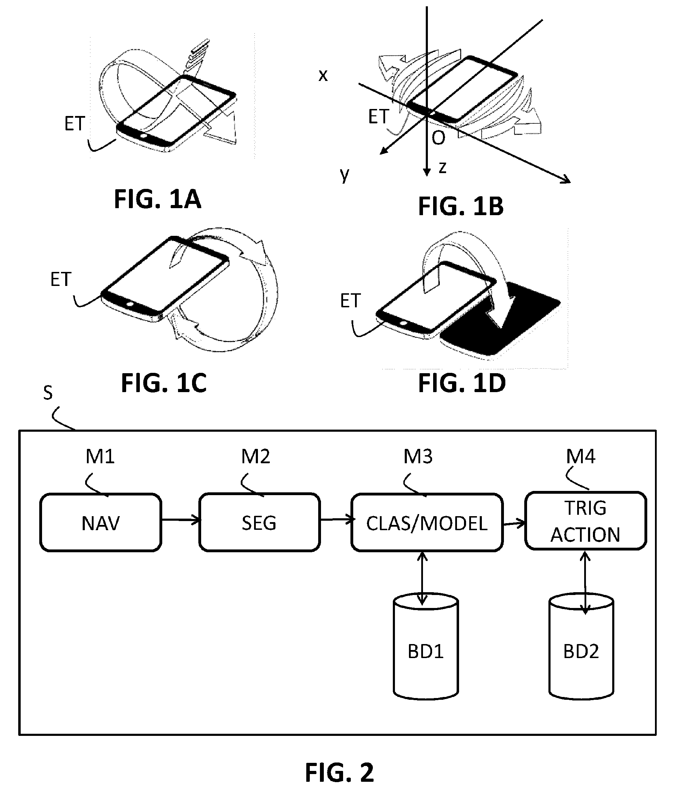

En relation avec la Figure **1**, on présente quelques exemples de gestes instrumentés exécutés par un utilisateur d'un équipement terminal ET. Dans la suite de la description, on considèrera que cet équipement est un terminal mobile de type «terminal intelligent» («smartphone», en anglais). Toutefois, l'invention ne se limite pas à ce type de terminal, mais concerne tout équipement terminal équipé d'un module de navigation inertielle, comme par exemple une télécommande, une console de jeux ou encore une tablette.

Les gestes illustrés par les exemples de la Figure **1** sont des gestes symboliques, c'est-à-dire qui représentent un symbole. De tels gestes sont réalisés sous forme de mouvements décrits dans l'espace 3D par la trajectoire de la main de l'utilisateur portant le terminal. Ces symboles peuvent être des chiffres, des lettres de l'alphabet, des formes sémantiques par exemple de type coeur, carré, triangle, un signe infini, en relation avec la Figure 1A, des secousses (« shake », en anglais) en relation avec la Figure 1B, des rotations continues dans le sens des aiguilles d'une montre, en relation avec la Figure 1C, ou dans le sens inverse, des retournements du terminal (« flip », en anglais) en relation avec la Figure 1 D ou encore des gestes rectilignes dans une direction particulière (par exemple, « right flick », en anglais). Bien sûr, d'autres gestes symboliques peuvent être exécutés.

On notera que l'invention qui va être décrite ci-dessous de façon plus détaillée, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

En relation avec la Figure **2**, on présente les éléments fonctionnels d'un système S de traitement d'un geste instrumenté mettant en oeuvre les principes de l'invention. Un tel système comprend un module de navigation inertielle M1 apte à produire en une succession d'instants temporels un vecteur de caractéristiques inertielles $\vec{V}(t_n)$, un module de segmentation temporelle d'un geste instrumenté M2 selon l'invention, apte à fournir une segmentation temporelle du geste comprenant un premier instant $t_{n1}$ de début de geste et un deuxième instant $t_{n2}$ de fin de geste, un module de classification/modélisation M3, apte à affecter au geste segmenté une classe parmi un ensemble de classes de gestes de référence prédéterminées ou bien, dans le cas d'une création de geste, à modéliser la classe du geste créé, lesdites classes étant stockées dans une première base de données BD1 et d'un module M4 d'association d'une action de commande prédéterminée à la classe de geste affectée à l'aide d'une deuxième base de données BD2 comprenant une pluralité d'associations classe de geste/action et de déclenchement de l'action associée. Par exemple, l'action associée peut être le lancement d'une application ou la mise en veille du terminal ou encore la demande de synchronisation avec un service distant.

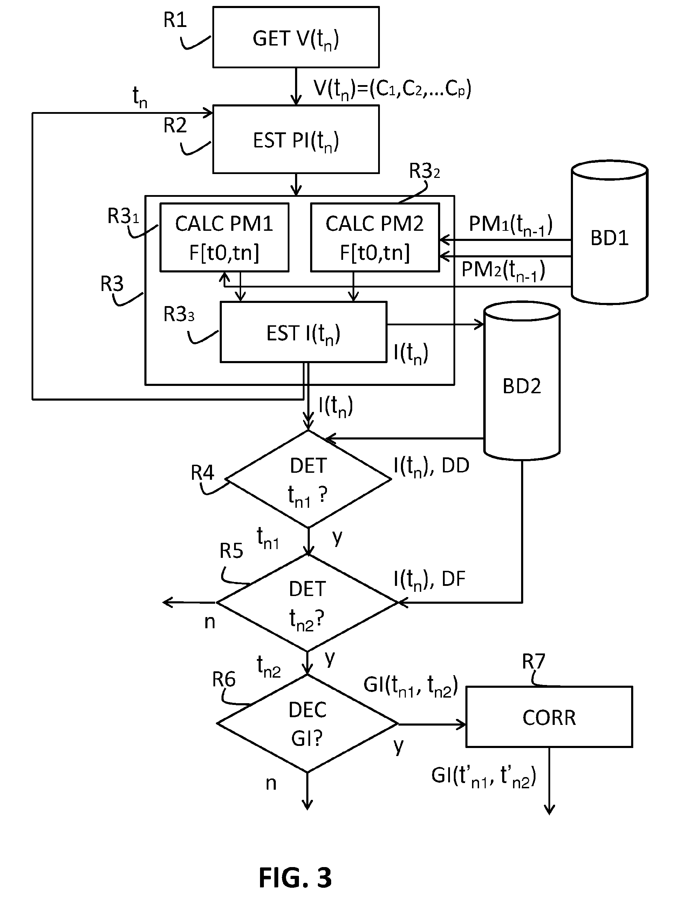

En relation avec la Figure **3**, on présente maintenant les étapes du procédé de segmentation temporelle d'un geste instrumenté selon un premier mode de réalisation de l'invention. Un tel procédé permet notamment de réaliser la fonction du module de segmentation temporelle M2 qui vient d'être présenté.

Au cours d'une première étape R1, un vecteur de caractéristiques inertielles

$\vec{V}(t_n) = (c_1, ..., c_p)$, avec p entier supérieur ou égal à 2, est obtenu à l'instant $t_n$, avec n entier non nul, du module de navigation inertielle NAV du terminal ET. Un tel vecteur est représentatif du signal de mouvement inertiel capté par l'ensemble des capteurs du module de navigation inertielle.

On considère par exemple que ce module comprend un sous-module accéléromètre apte à mesurer une accélération à l'instant $t_n$ sur les trois axes d'un référentiel Réf (O, x, y, z) du terminal ET, tel que celui représenté en relation avec la Figure 1B, un gyromètre apte à mesurer une vitesse angulaire à l'instant $t_n$ sur les trois axes du référentiel Réf et un magnétomètre apte à mesurer le champ magnétique terrestre sur les trois axes du référentiel Réf. Dans cet exemple, le vecteur de caractéristiques inertielles comprend donc 9 composantes.

Un nouveau vecteur de caractéristiques $\vec{V}(tn)$ est acquis à intervalles réguliers, par exemple toutes les 20 ms par le module de navigation inertielle et transmis au module de segmentation temporelle M2.

Au cours d'une étape R2, on calcule une puissance instantanée $P(t_n)$ du vecteur de caractéristiques $\vec{V}$ à l'instant $t_n$, de la façon suivante :

$$P(t_n) = 0.5 \sqrt{\sum_{i=1}^{p} c_i^2} \quad (1)$$

Une telle puissance instantanée représente une énergie reçue par les différents capteurs du module de navigation, à l'instant $t_n$, du fait du mouvement du terminal ET.

L'étape R3 a pour fonction d'estimer la valeur d'un indicateur I de geste instrumenté à l'instant $t_n$. Dans ce premier mode de réalisation de l'invention, il comprend trois sous-étapes :

En $R3_1$, on calcule un premier estimateur de puissance $E_0$ défini par la formule récursive suivante :

$$E_0(t_n) = \beta_0 E_0(t_{n-1}) + (1 - \beta_0)P(t_n) \,(2),$$

avec $\beta_0$ facteur de pondération réel non nul, de valeur absolue inférieure à 1.

En $R3_2$, on calcule un second estimateur de puissance $E_1$ défini par la fonction récursive suivante:

$$E_1(t_n) = \beta_1 E_1(t_{n-1}) + (1 - \beta_1)P(t_n) \quad (3)$$

Avec $\beta_1$ facteur de pondération réel non nul de valeur absolue inférieure à 1.

En R3$_3$, on calcule un indicateur de geste utile I que l'on définit par :

$$I = |E_0(t_n) - E_1(t_n)| \quad (4)$$

L'indicateur de geste calculé selon l'invention résulte d'une différence entre les valeurs de ces deux estimateurs de puissance E0 et E1 à l'instant $t_n$.

Il traduit une évolution lissée de la quantité d'énergie captée par le module de navigation inertielle à chaque instant $t_n$ par rapport à une quantité d'énergie moyenne mesurée dans le passé.

On comprend que, selon les valeurs choisies pour les facteurs de pondération, le premier et le deuxième estimateurs vont calculer chacun une puissance moyenne qui donne plus ou moins de poids à la nouvelle valeur de puissance instantanée calculée à l'instant $t_n$.

Dans un exemple d'implémentation, les valeurs de pondération sont choisies comme suit :

$$\beta_0 = 0.98 \text{ et } \beta_1 = 0.67.$$

Le premier estimateur E0 donne donc très peu de poids à la nouvelle valeur de puissance instantanée, mais beaucoup aux valeurs passées. Il s'agit d'un estimateur à longue mémoire. Il en résulte que la puissance moyenne estimée pour le geste en cours d'exécution par ce premier estimateur est très peu impactée par la nouvelle valeur.

Au contraire, le second estimateur E1 a recours à des valeurs de pondération plus équilibrées, si bien qu'il donne plus de poids à la nouvelle valeur de puissance instantanée reçue pour l'instant $t_n$.

Ainsi, lorsqu'un geste instrumenté commence à être exécuté, la valeur de puissance instantanée à l'instant courant devient forte, ce qui va se traduire par une augmentation de la valeur du deuxième estimateur E1. En revanche, si la valeur de puissance ne continue pas à augmenter au cours des instants suivants, ce pic de puissance instantanée va être incorporé au premier estimateur E0 et conduire soit à une stagnation de la valeur de l'indicateur I (si le mouvement capté garde une énergie environ constante), soit à une chute de sa valeur (si le mouvement capté perd de l'énergie).

L'instant initial $t_0$ à partir duquel les estimateurs de puissance commencent à être calculés peut être choisi de différentes manières, l'important étant que la fenêtre temporelle précédent l'instant courant $t_n$ soit suffisamment grande pour constituer un historique représentatif :

- L'instant $t_0$ peut être celui où le terminal est mis en état de marche ;
- L'instant $t_0$ peut être choisi égal à l'instant de lancement d'une application particulière mettant en oeuvre le module M2 de segmentation temporelle d'un geste ;
- L'instant $t_0$ peut être déterminé de façon glissante, de telle sorte que la fenêtre temporelle considérée soit égale à une durée prédéterminée, par exemple de 1 seconde ou 500 ms.

En R4, on détermine un instant $t_{n1}$ de début de geste à partir de l'indicateur I selon les critères suivants :

- l'estimation du début de geste est active lorsque cet indicateur *I* dépasse un seuil donné *SD* ;

- pour être considéré comme geste valable, le signal doit rester au-dessus de ce seuil pendant la durée minimale *DD* ;

Si un instant $t_{n1}$ de début de geste a été déterminé, on détermine en R5 un instant $t_{n2}$ de fin de geste en fonction des critères suivants :

- il y a une fin de geste lorsque le signal repasse sous le seuil SF, pendant un intervalle de temps prédéterminé DF. Il s'agit ainsi d'éviter de couper un geste comportant des points d'accélération nulle, alors qu'il n'est pas fini.

Si un instant $t_2$ de fin de geste a été décidé, une décision relative à la segmentation d'un geste instrumenté est prise *en* R6, au moins en fonction du critère suivant :

- le signal utile doit être d'une durée minimale D_min.

De façon avantageuse, une correction est appliquée en R7 sur l'instant de début et de fin de geste, de la façon suivante :

- la plage du geste correspond alors au signal entre les instants de début et de fin détectés, en ajoutant une portion de signal en amont DDC et en en retirant en aval DFC (l'indicateur étant lissé, il est légèrement décalé dans le temps) ;

Dans un exemple d'implémentation pour le capteur accélérométrique, les valeurs suivantes de seuils et de durée minimales ont été choisies: *SD=280 $g^2$, SF=230 $g^2$, DD= 8ms, DF = 10ms, D_min = 400ms, DDC=5ms, DFC=5ms.*

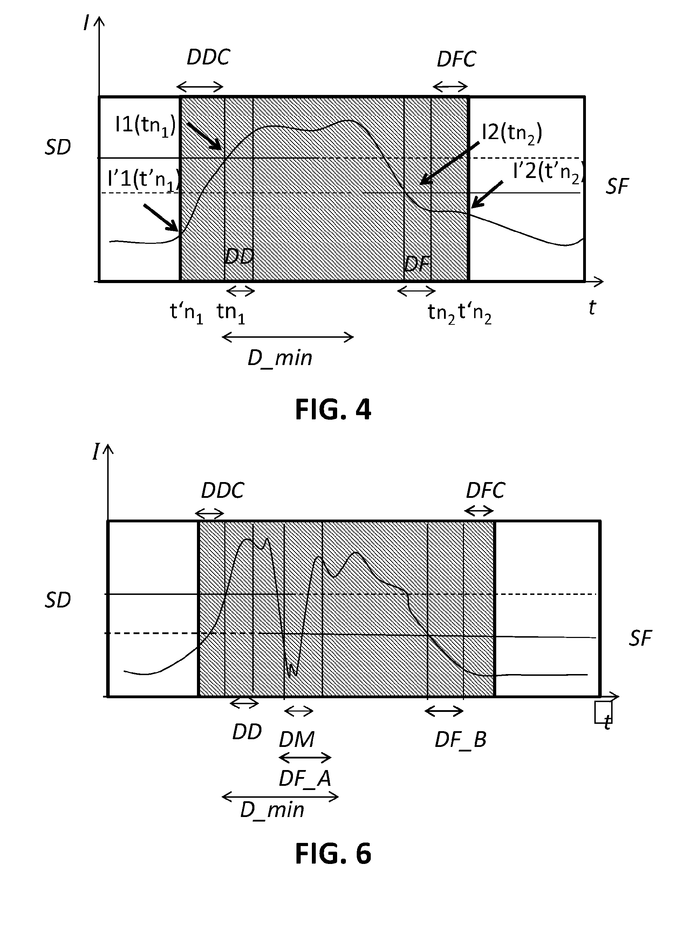

En relation avec la Figure **4**, on présente maintenant une courbe d'évolution de l'indicateur de geste I dont le calcul vient d'être détaillé, en fonction du temps, pendant l'exécution d'un geste.

Cette courbe montre que l'indicateur I a, en l'absence de production de geste instrumenté, une valeur faible, environ constante. Sa valeur augmente ensuite avec une pente forte et dépasse le seuil de début de geste SD, l'instant $t_1$. La valeur de l'indicateur I continue à augmenter rapidement pendant la période de durée DD, à l'issue de laquelle une décision de début de geste au point $I1(t_1)$ est confirmée. Puis la valeur de l'indicateur I atteint un maximum.. La courbe se met à décroître avec une forte pente pour franchir le seuil SF à l'instant $t_2$. On notera que ce seuil de fin a une valeur inférieure au seuil de début SD. La courbe continue à descendre fortement jusqu'à la fin de la période DF, à l'issue de laquelle le point $I2(t_2)$ est déterminé comme le point de fin de geste.

Cette figure montre aussi que, pour cette courbe, la durée $tn_2 - tn_1$ est bien supérieure à l'intervalle de temps minimal D_min prédéterminé pour qu'un geste instrumenté soit considéré comme reconnu.

Enfin, selon un aspect de l'invention, une étape R7 de correction de l'instant de début de geste $t_{n1}$ et de l'instant $t_{n2}$ de début de geste est apportée, pour compenser le fait que l'indicateur de geste I est obtenu à partir d'informations de puissances lissées sur une fenêtre temporelle $F[t_0, t_n]$ et donne ainsi une information décalée dans le temps. Une séquence de temps supplémentaire DDC lui est donc ajoutée au début, ce qui revient à placer le début de geste à l'instant $t'n_1 = tn_1 - DDC$ et une séquence de temps supplémentaire lui est ajoutée à la fin, ce qui à revient à placer l'instant de fin de geste à $t'n_2 = tn_2 + DFC$. Le geste segmenté temporellement $GI(t'_{n1}, t'_{n2})$ correspond à la zone de courbe hachurée de la courbe.

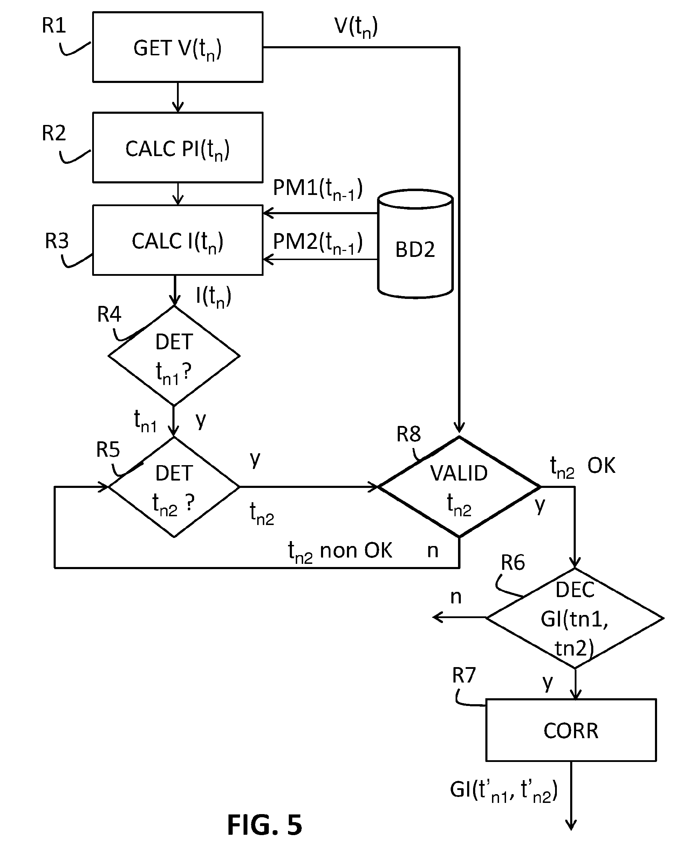

En relation avec la Figure **5**, on présente maintenant les étapes du procédé de segmentation temporelle d'un geste instrumenté selon un deuxième mode de réalisation de l'invention.

Selon ce deuxième mode de réalisation, les étapes R1 à R7 sont identiques à celles décrites en relation avec la Figure **3**.

Le procédé comprend en outre, suite à la détermination d'un instant de fin de geste par l'étape R5, une étape R8 de validation de l'instant $t_{n2}$ de fin de geste ainsi déterminé. Une telle étape s'appuie sur le calcul d'une mesure M de variation entre les valeurs de caractéristiques inertielles instantanées et estimées sur chaque composante i, avec i entier compris entre 1 et p, du vecteur de caractéristiques $\overrightarrow{V(tn)}$ de la façon suivante :

$$M(t_n) = \sum_{i=1}^{p} 0.5 |EV_i(t_n) - c_i(t_n)| \ (5)$$

avec $t_n = (c_1, \dots c_p)$ les $p$ valeurs d'un capteur à l'instant $t_n$ et $EV_i(t_n) = \beta_i E_i(t_{n-1}) + (1 - \beta_i)c_i(t_n)$ un estimateur de la valeur inertielle $c_i$ à l'instant $t_n$ à partir des valeurs inertielles obtenues aux instants précédents sur la fenêtre temporelle $F[t_0, tn]$.

Cet estimateur réalise donc une somme des valeurs absolues des différences entre valeurs moyennes estimées et valeurs réelles sur chaque composante inertielle du référentiel Réf.

La valeur de la mesure M obtenue est comparée pendant une durée minimale *DM* à un seuil *TM*, fixé à partir d'une base de gestes annotés. Si la valeur de la mesure M est supérieure ou égale au seuil TM pendant la durée DM, alors la décision de fin de geste est rejetée le cas échéant

Si la valeur de la mesure M est inférieure au seuil TM pendant la durée DM, alors la décision de fin de geste est validée.

Dans un exemple d'implémentation pour le capteur accélérométrique, nous choisissons : *DM=10ms, TM=20g,* $\beta$*,* **= 0.96.**

Les coefficients de pondération $\beta_i$ étant fixés à une valeur très élevée, un très fort poids est donnée à l'historique, ce qui permet de relativiser l'impact de valeurs ponctuelles de caractéristiques inertielles $ci(t_n)$ un peu bruitées. Tant que ces valeurs ponctuelles continuent suffisamment à augmenter en valeur absolue, la mesure M a tendance à augmenter et on considère que le geste est toujours en cours de production, ce qui va à l'encontre de la décision de fin de geste prise en R5 . A l'inverse, une diminution de la mesure M avec passage sous le seuil TM pendant la durée DM valide l'instant $t_{n2}$ précédemment déterminé, comme marquant la fin du geste.

Cette mesure permet donc, en raffinant la décision obtenue à partir des estimateurs de puissance, d'éviter la sur-segmentation, c'est-à-dire le fait de définir pour un même geste instrumenté plusieurs séquences de début et de fin de geste. En effet, cette mesure, en se basant sur les valeurs réelles de caractéristiques inertielle et non sur le carré de ces valeurs, n'évolue pas de la même manière que l'estimateur de geste en fonction de l'énergie inertielle reçue par le module de navigation inertielle du terminal. Elle est particulièrement pertinente, lorsque l'énergie inertielle reçue décroît de façon momentanée lors de la production d'un geste sans pour autant correspondre à la fin d'un geste. L'utilisateur a en effet tendance à ralentir la vitesse d'exécution de son geste en certains points de sa trajectoire. Par exemple, il ralentit son geste lors de la production d'un coeur, au niveau des courbes centrales, notamment parce que ces formes sont plus délicates à exécuter. Dans ce cas, l'information donnée par la mesure M révèle un niveau d'activité suffisant pour éliminer l'hypothèse d'une fin de geste.

On notera que cette étape de validation a également pour avantage de réduire le temps de latence de réponse du procédé de segmentation temporelle selon l'invention, c'est-à-dire la durée DF associée à la détermination d'un instant de fin de geste.

En effet, l'intervalle de temps DM étant inférieur à l'intervalle DF, lorsque la fin de geste est validée selon la mesure M, le procédé de segmentation temporelle se termine plus tôt que lorsque la fin de geste est validée par l'indicateur I.

En relation avec la Figure **6**, on présente une courbe d'évolution de l'indicateur de geste I en fonction du temps, pour un deuxième exemple de geste et selon le deuxième mode de réalisation de l'invention qui vient d'être présenté. Cette deuxième courbe met en évidence deux plages de fin de gestes DF_A et DF_B. La première DF_A n'est pas validée par l'étape de validation R7, donc la segmentation continue jusqu'à DF_B qui, elle, est validée et marque la fin du geste.

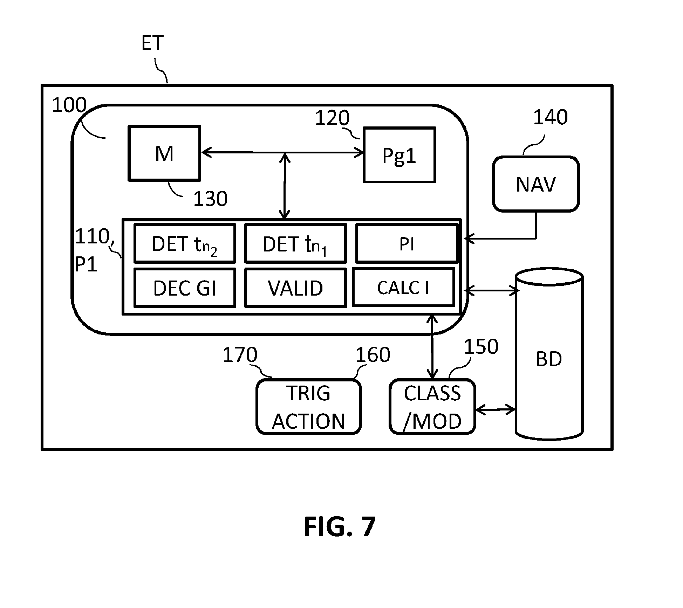

En relation avec la Figure **7**, on considère maintenant la structure simplifiée d'un dispositif 100 de segmentation temporelle d'un geste instrumenté selon un exemple de réalisation de l'invention. Le dispositif de segmentation temporelle 100 met en oeuvre le procédé de segmentation temporelle selon l'invention tel que décrit ci-dessus.

Dans cet exemple, le dispositif 100 est intégré à un équipement terminal ET d'un utilisateur. Selon une variante, le dispositif 100 pourrait être indépendant et connecté au terminal ET.

Par exemple, le dispositif 100 comprend une unité de traitement 110, équipée par exemple d'un processeur P1, et pilotée par un programme d'ordinateur $Pg_1$ 120, stocké dans une mémoire 130 et mettant en oeuvre le procédé de segmentation selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en oeuvre les étapes du procédé de segmentation décrit précédemment, selon les instructions du programme d'ordinateur 120. Dans l'exemple de réalisation de l'invention considéré, le dispositif 100 comprend au moins une unité GET d'obtention d'un vecteur de caractéristiques inertielles à un instant $t_n$, une unité PI de calcul d'une puissance instantanée dudit vecteur à l'instant $t_n$, une unité CALC I de calcul d'un indicateur de geste I à partir de première et deuxième puissances moyennes estimées à l'instant $t_n$, une unité DET $t_{n1}$ de détermination d'un instant $t_{n1}$ de début de geste et une unité DET $t_{n2}$ de détermination d'un instant $t_{n2}$ de fin de geste et une unité DEC GI de décision de segmentation d'un geste instrumenté GI. Ces unités sont pilotées par le processeur P1 de l'unité de traitement 110.

Le dispositif 100 de segmentation temporelle est donc agencé pour coopérer avec le terminal ET et, en particulier les modules suivants de ce terminal: un module NAV de navigation inertielle apte à mesurer un vecteur $\vec{V}$ de caractéristiques inertielles à un instant $t_n$, un module CLAS/MOD de classification d'un geste G reconnu par le dispositif 100 selon l'invention ou de modélisation d'un geste créé par l'utilisateur du terminal ET, un module TRIG ACTION de déclenchement d'une action associée au geste classifié ou modélisé.

L'invention qui vient d'être présentée peut trouver de nombreuses applications. Notamment, elle peut être utilisée pour segmenter temporellement un geste instrumenté afin de préparer sa classification automatique par un module de classification du terminal.

Avantageusement, elle peut être aussi mise en oeuvre dans une application de création de geste, qui propose à l'utilisateur d'associer un geste de son choix à une action de commande, comme le lancement d'une application. Par exemple, l'utilisateur dessine une enveloppe à chaque fois qu'il veut lancer l'application de messagerie. L'utilisateur dispose généralement de plusieurs essais pour produire le geste instrumenté qu'il a choisi. Un module d'analyse/classification le caractérise selon une technique connue de l'homme de métier, par exemple par apprentissage de modèles de Markov cachés continus et stocke en mémoire les caractéristiques obtenues et l'action de commande à laquelle l'utilisateur souhaite l'associer. Avec l'invention, le geste produit par l'utilisateur bénéficiera d'une segmentation temporelle précise avant son analyse par le module d'analyse/classification.

Bien sûr, d'autre applications de l'invention peuvent être envisagées.

## Revendications

**1.** Procédé de segmentation temporelle d'un geste instrumenté en cours d'exécution par un utilisateur à l'aide d'un terminal (ET) équipé d'un module (M1) de navigation inertielle, apte à mesurer, pendant l'exécution du geste, un vecteur de caractéristiques inertielles représentatif d'un mouvement dudit terminal, **caractérisé en ce que** ledit procédé comprend les étapes suivantes, mises en oeuvre à chaque instant courant:

    - calcul (R2) d'une valeur de puissance instantanée dudit vecteur à l'instant courant;
    - estimation (R3) d'un indicateur de geste à partir d'une variation entre ladite valeur de puissance instantanée et une valeur de puissance moyenne estimée sur une fenêtre temporelle précédant l'instant courant ;
    - détermination (R4) d'un premier instant, dit de début de geste, correspondant à l'instant courant, lorsque l'indicateur de geste estimé prend une valeur supérieure ou égale à un premier seuil prédéterminé pendant un intervalle de temps supérieur ou égal à un premier intervalle prédéterminé ;
    - suite à la détection d'un début de geste au premier instant courant, détermination (R5) d'un deuxième instant, dit de fin de geste lorsque, à l'instant courant, l'indicateur de geste estimé prend une valeur inférieure ou égale à un deuxième seuil prédéterminé pendant un intervalle de temps supérieur ou égal à un deuxième intervalle de temps prédéterminé.

**2.** Procédé de segmentation temporelle d'un geste instrumenté selon la revendication **1**, **caractérisé en outre en ce qu'**il comprend une étape (R6) de décision positive de segmentation d'un geste lorsque le premier et le deuxième instants courants sont distants d'un intervalle de temps supérieur à un troisième seuil prédéterminé.

**3.** Procédé de segmentation temporelle d'un geste instrumenté selon l'une des revendications **1** et **2**, **caractérisé en outre en ce que** l'étape (R3) d'estimation d'un indicateur de geste comprend l'estimation (R3$_1$) d'un premier estimateur de puissance moyenne des puissances instantanées sur ladite fenêtre, lesdites puissances instantanées étant pondérées selon une première pondération, l'estimation (R3$_2$) d'un deuxième estimateur de puissance moyenne des puissances instantanées sur ladite fenêtre, lesdites puissances instantanées étant pondérées selon une deuxième pondération, et le calcul (R3$_3$) de l'indicateur de geste en fonction de la valeur absolue de la différence entre les valeurs estimées du premier et du deuxième estimateur.

**4.** Procédé de segmentation temporelle d'un geste instrumenté selon la revendication 3, **caractérisé en outre en ce que** la deuxième pondération applique un poids plus élevé à la valeur de puissance instantanée calculée à l'instant courant que la première pondération.

**5.** Procédé de segmentation temporelle d'un geste instrumenté selon l'une des revendications **3** ou **4**, **caractérisé en outre en ce que** le premier et le deuxième estimateur sont calculés de façon récursive à partir de la valeur estimée à l'instant précédent et de la valeur de puissance instantanée calculée à l'instant courant.

**6.** Procédé de segmentation temporelle d'un geste instrumenté selon l'une des revendications **1** à **5**, caractérisé outre en ce qu'il comprend une étape d'initialisation de l'étape (R3) d'estimation de l'indicateur de geste, à un instant initial, dont la valeur appartient au groupe comprenant :

- Un instant de mise sous tension de l'équipement terminal ;
- Un instant de lancement d'une application prédéterminée ;
- L'instant courant diminué d'une taille de fenêtre temporelle prédéterminée.

**7.** Procédé de segmentation temporelle d'un geste instrmenté selon l'une des revendications précédentes, **caractérisé en outre en ce que**, suite à la détermination d'un deuxième instant de fin de geste, il déclenche une étape (R7) de validation comprenant les sous-étapes suivantes de :

- calcul d'une mesure de variation inertielle entre les valeurs instantanées du vecteur de caractéristiques inertielles à l'instant courant et des valeurs moyennes estimées desdites caractéristiques sur une fenêtre temporelle précédant l'instant courant ;
- comparaison de la valeur de variation calculée à un seuil prédéterminé pendant un intervalle de temps prédéterminé;
- validation de l'instant de fin de geste déterminé lorsque la mesure calculée est inférieure audit seuil au moins pendant l'intervalle de temps prédéterminé.

**8.** Dispositif (100) de segmentation temporelle d'un geste instrumenté en cours d'exécution par un utilisateur à l'aide d'un terminal équipé d'un module de navigation inertielle, apte à mesurer, pendant l'exécution du geste, un vecteur de caractéristiques inertielles représentatives d'un mouvement dudit terminal, **caractérisé en ce qu'**il comprend les modules suivants, mis en oeuvre à chaque instant courant :

- calcul (R2) d'une valeur de puissance instantanée dudit vecteur à l'instant courant;
- estimation (R3) d'un indicateur de geste à partir d'une variation entre ladite valeur de puissance instantanée et une valeur de puissance moyenne estimée sur une fenêtre temporelle précédant l'instant courant ;
- détermination (R4) d'un premier instant, dit de début de geste, correspondant à l'instant courant, lorsque l'indicateur de geste estimé prend une valeur supérieure ou égale à un premier seuil prédéterminé pendant un intervalle de temps supérieur ou égal à un premier intervalle prédéterminé ;
- suite à la détection d'un début de geste au premier instant courant, détermination (R5) d'un deuxième instant, dit de fin de geste lorsque, à l'instant courant, l'indicateur de geste estimé prend une valeur inférieure ou égale à un deuxième seuil prédéterminé pendant un intervalle de temps supérieur ou égal à un deuxième intervalle de temps prédéterminé.

**9.** Terminal d'utilisateur (ET), équipé d'un module (M1) de navigation inertielle apte à mesurer, pendant l'exécution d'un geste, un vecteur de caractéristiques inertielles représentatif d'un mouvement dudit terminal, **caractérisé en ce qu'**il comprend un dispositif (100) de segmentation temporelle d'un geste instrumenté selon la revendication **8**.

**10.** Programme d'ordinateur (120) comprenant des instructions pour la mise en oeuvre des étapes du procédé de segmentation temporelle selon l'une des revendications **1 à 7**, lorsqu'il est exécuté par un processeur.

11. Support d'enregistrement lisible par un processeur, sur lequel est enregistré un programme d'ordinateur selon la revendication **10**.

**Patentansprüche**

1. Zeitliches Segmentierungsverfahren einer instrumentellen Geste während der Ausführung durch einen Benutzer mit Hilfe von einem Endgerät (TE), das mit einem Trägheitsnavigationsmodul (M1) ausgestattet ist, das geeignet ist, während der Ausführung der Geste einen Vektor der Trägheitseigenschaften zu messen, der für eine Bewegung des Endgeräts repräsentativ ist, **dadurch gekennzeichnet, dass** das Verfahren die folgenden Schritte aufweist, die zu jedem gegenwärtigen Zeitpunkt umgesetzt werden:

   - Berechnen (R2) eines Wertes der Momentanleistung des Vektors zum gegenwärtigen Zeitpunkt;
   - Schätzen (R3) eines Gestenindikators aus einer Abweichung zwischen dem Wert der Momentanleistung und einem durchschnittlichen Leistungswert, der über ein Zeitfenster vor dem gegenwärtigen Zeitpunkt geschätzt wird;
   - Bestimmen (R4) eines ersten Zeitpunkts, dem so genannten Gestenbeginn, der dem gegenwärtigen Zeitpunkt entspricht, wenn der geschätzte Gestenindikator einen Wert annimmt, der höher als oder gleich einem ersten vorgegebenen Schwellenwert während eines Zeitintervalls ist, das größer als oder gleich einem ersten vorbestimmten Intervall ist;
   - nach dem Erkennen eines Gestenbeginns zum ersten gegenwärtigen Zeitpunkt Bestimmen (R5) eines zweiten Zeitpunkts, dem so genannten Gestenende, wenn der geschätzte Gestenindikator zum gegenwärtigen Zeitpunkt, einen Wert annimmt, der niedriger als oder gleich einem zweiten vorbestimmten Schwellenwert während eines Zeitintervalls ist, das größer als oder gleich einem zweiten vorbestimmten Zeitintervall ist.

2. Zeitliches Segmentierungsverfahren einer instrumentellen Geste nach Anspruch 1, außerdem **dadurch gekennzeichnet, dass** es einen Schritt (R6) des positiven Entscheidens der Segmentierung einer Geste aufweist, wenn der erste und der zweite gegenwärtige Zeitpunkt von einem Zeitintervall entfernt sind, das größer als ein dritter vorbestimmter Schwellenwert ist.

3. Zeitliches Segmentierungsverfahren einer instrumentellen Geste nach einem der Ansprüche 1 und 2, außerdem **dadurch gekennzeichnet, dass** der Schritt (R3) des Schätzens eines Gestenindikators das Schätzen (R3$_1$) eines ersten Schätzers der mittleren Leistung der Momentanleistungen über das Zeitfenster, wobei die Momentanleistungen nach einer ersten Gewichtung gewichtet werden, das Schätzen (R3$_2$) eines zweiten Schätzers der mittleren Leistung der Momentanleistungen über das Zeitfenster, wobei die Momentanleistungen nach einer zweiten Gewichtung gewichtet werden, und das Berechnen (R3$_s$) des Gestenindikators nach dem absoluten Wert der Differenz zwischen den geschätzten Werten des ersten und des zweiten Schätzers aufweist.

4. Zeitliches Segmentierungsverfahren einer instrumentellen Geste nach Anspruch 3, außerdem **dadurch gekennzeichnet, dass** die zweite Gewichtung ein höheres Gewicht auf den Wert der Momentanleistung anwendet, der zum gegenwärtigen Zeitpunkt berechnet wird, als die erste Gewichtung.

5. Zeitliches Segmentierungsverfahren einer instrumentellen Geste nach einem der Ansprüche 3 oder 4, außerdem **dadurch gekennzeichnet, dass** der erste und der zweite Schätzer rekursiv aus dem Wert berechnet werden, der zum vorhergehenden Zeitpunkt geschätzt wird, und dem Wert der Momentanleistung, die zum gegenwärtigen Zeitpunkt berechnet wird.

6. Zeitliches Segmentierungsverfahren einer instrumentellen Geste nach einem der Ansprüche 1 bis 5, außerdem **dadurch gekennzeichnet, dass** es einen Schritt des Initialisierens des Schrittes (R3) des Schätzens des Gestenindikators zu einem Anfangszeitpunkt aufweist, dessen Wert zu der Gruppe gehört, umfassend:

   - einen Zeitpunkt des Anlegens von Spannung an das Endgerät;
   - einen Zeitpunkt des Startens einer vorbestimmten Anwendung;
   - den gegenwärtigen Zeitpunkt, der um eine vorbestimmte Größe des Zeitfensters verringert ist.

7. Zeitliches Segmentierungsverfahren einer instrumentellen Geste nach einem der vorhergehenden Ansprüche, außerdem **dadurch gekennzeichnet, dass** es als Folge des Bestimmens eines zweiten Zeitpunkts eines Gestenendes einen Schritt (R7) des Validierens veranlasst, umfassend die folgenden Unterschritte:

   - Berechnen eines Wertes einer Trägheitsvariation zwischen den Momentanwerten des Vektors der Trägheitseigenschaften zum gegenwärtigen Zeitpunkt und den mittleren geschätzten Werten der Eigenschaften über ein Zeitfenster vor dem gegenwärtigen Zeitpunkt;

- Vergleichen des berechneten Wertes der Variation mit einem vorbestimmten Schwellenwert während eines vorbestimmten Zeitintervalls;

- Validieren des bestimmten Zeitpunkts eines Gestenendes, wenn der berechnete Wert niedriger als der Schwellenwert mindestens während des vorbestimmten Zeitintervalls ist.

8. Vorrichtung (100) einer zeitlichen Segmentierung einer instrumentellen Geste während der Ausführung durch einen Benutzer mit Hilfe von einem Endgerät, das mit einem Trägheitsnavigationsmodul ausgestattet ist, das geeignet ist, während der Ausführung der Geste einen Vektor der Trägheitseigenschaften zu messen, die für eine Bewegung des Endgeräts repräsentativ sind, **dadurch gekennzeichnet, dass** sie die folgenden Module aufweist, die zu jedem gegenwärtigen Zeitpunkt umgesetzt werden:

- Berechnen (R2) eines Wertes der Momentanleistung des Vektors zum gegenwärtigen Zeitpunkt;

- Schätzen (R3) eines Gestenindikators aus einer Variation zwischen dem Wert der Momentanleistung und einem durchschnittlichen Leistungswert, der über ein Zeitfenster vor dem gegenwärtigen Zeitpunkt geschätzt wird;

- Bestimmen (R4) eines ersten Zeitpunkts, dem so genannten Gestenbeginn, der dem gegenwärtigen Zeitpunkt entspricht, wenn der geschätzte Gestenindikator einen Wert annimmt, der höher als oder gleich einem ersten vorgegebenen Schwellenwert während eines Zeitintervalls ist, das größer als oder gleich einem ersten vorbestimmten Intervall ist;

- nach dem Erkennen eines Gestenbeginns zum ersten gegenwärtigen Zeitpunkt Bestimmen (R5) eines zweiten Zeitpunkts, dem so genannten Gestenende, wenn der geschätzte Gestenindikator zum gegenwärtigen Zeitpunkt einen Wert annimmt, der niedriger als oder gleich einem zweiten vorbestimmten Schwellenwert während eines Zeitintervalls ist, das größer als oder gleich einem zweiten vorbestimmten Intervall ist.

9. Benutzerendgerät (ET), das mit einem Trägheitsnavigationsmodul (M1) ausgestattet ist, das geeignet ist, während der Ausführung einer Geste einen Vektor der Trägheitseigenschaften zu messen, der für eine Bewegung des Endgeräts repräsentativ ist, **dadurch gekennzeichnet, dass** es eine Vorrichtung (100) eines zeitlichen Segmentierungsverfahrens einer instrumentellen Geste nach Anspruch 8 aufweist.

10. Computerprogramm (120), umfassend Anleitungen zum Umsetzen der Schritte des zeitlichen Segmentierungsverfahrens nach einem der Ansprüche 1 bis 7, wenn es von einem Prozessor ausgeführt wird.

11. Prozessorlesbares Aufzeichnungsmedium, auf dem ein Computerprogramm nach Anspruch 10 aufgezeichnet ist.

**Claims**

1. Method of temporal segmentation of an instrumented gesture in the course of execution by a user with the aid of a terminal (ET) equipped with an inertial navigation module (MI), able to measure, during the execution of the gesture, a vector of inertial characteristics representative of a movement of said terminal, **characterized in that** said method comprises the following steps, implemented at each current instant:

- calculation (R2) of an instantaneous power value of said vector at the current instant;

- estimation (R3) of a gesture indicator on the basis of a variation between said instantaneous power value and a mean power value estimated over a time window preceding the current instant;

- determination (R4) of a first instant, termed start of gesture, corresponding to the current instant, when the estimated gesture indicator takes a value greater than or equal to a first predetermined threshold during a time interval greater than or equal to a first predetermined interval;

- subsequent to the detection of a start of gesture at the first current instant, determination (R5) of a second instant, termed end of gesture when, at the current instant, the estimated gesture indicator takes a value less than or equal to a second predetermined threshold during a time interval greater than or equal to a second predetermined time interval.

2. Method of temporal segmentation of an instrumented gesture according to Claim 1, further **characterized in that** it comprises a step (R6) of positive decision of segmentation of a gesture when the first and the second current instants are separated by a time interval greater than a third predetermined threshold.

3. Method of temporal segmentation of an instrumented gesture according to either of Claims 1 and 2, further **characterized in that** the step (R3) of estimating a gesture indicator comprises the estimation ($R3_1$) of a first estimator of mean power of the instantaneous powers over said window, said instantaneous powers being weighted according to a first weighting, the estimation ($R3_2$) of a second estimator of mean power of the instantaneous powers over said window, said instantaneous powers being weighted according to a second weighting, and the calculation ($R3_3$) of the gesture indicator as a function of the absolute value of the difference between the estimated values of the first and of the second estimator.

4. Method of temporal segmentation of an instrumented gesture according to Claim **3**, further **characterized in that** the second weighting applies a higher weight to the instantaneous power value calculated at the current instant than the first weighting.

5. Method of temporal segmentation of an instrumented gesture according to one of Claims **3** or **4**, further **characterized in that** the first and the second estimator are calculated in a recursive manner on the basis of the value estimated at the previous instant and of the instantaneous power value calculated at the current instant.

6. Method of temporal segmentation of an instrumented gesture according to one of Claims **1** to **5**, further **characterized in that** it comprises a step of initializing the step (R3) of estimating the gesture indicator, at an initial instant, whose value belongs to the group comprising:

   - An instant of power-up of the terminal equipment;
   - An instant of launching of a predetermined application;
   - The current instant decreased by a predetermined time-window size.

7. Method of temporal segmentation of an instrumented gesture according to one of the preceding claims, further **characterized in that**, subsequent to the determination of a second instant of end of gesture, it triggers a validation step (R7) comprising the following sub-steps of:

   - calculation of a measure of inertial variation between the instantaneous values of the vector of inertial characteristics at the current instant and of the estimated mean values of said characteristics over a time window preceding the current instant;
   - comparison of the calculated variation value with a predetermined threshold during a predetermined time interval;
   - validation of the instant of end of gesture determined when the calculated measure is less than said threshold at least during the predetermined time interval.

8. Device (100) for temporal segmentation of an instrumented gesture in the course of execution by a user with the aid of a terminal equipped with an inertial navigation module, able to measure, during the execution of the gesture, a vector of inertial characteristics representative of a movement of said terminal, **characterized in that** it comprises the following modules, implemented at each current instant:

   - calculation (R2) of an instantaneous power value of said vector at the current instant;
   - estimation (R3) of a gesture indicator on the basis of a variation between said instantaneous power value and a mean power value estimated over a time window preceding the current instant;
   - determination (R4) of a first instant, termed start of gesture, corresponding to the current instant, when the estimated gesture indicator takes a value greater than or equal to a first predetermined threshold during a time interval greater than or equal to a first predetermined interval;
   - subsequent to the detection of a start of gesture at the first current instant, determination (R5) of a second instant, termed end of gesture when, at the current instant, the estimated gesture indicator takes a value less than or equal to a second predetermined threshold during a time interval greater than or equal to a second predetermined time interval.

9. User terminal (ET), equipped with an inertial navigation module (M1) able to measure, during the execution of a gesture, a vector of inertial characteristics representative of a movement of said terminal, **characterized in that** it comprises a device (100) for temporal segmentation of an instrumented gesture according to Claim **8**.

10. Computer program (120) comprising instructions for the implementation of the steps of the method of temporal segmentation according to one of Claims **1** to **7**, when it is executed by a processor.

11. Recording medium readable by a processor, on which a computer program according to Claim **10** is recorded.

**FIG. 1A**

x
ET
O
y z

**FIG. 1B**

ET

**FIG. 1C**

ET

**FIG. 1D**

S

| M1 | M2 | M3 | M4 |

| NAV | → | SEG | → | CLAS/MODEL | → | TRIG ACTION |

BD1

BD2

**FIG. 2**

**FIG. 3**

**FIG. 4**

**FIG. 6**

R1 — GET V($t_n$) — V($t_n$)

R2 — CALC PI($t_n$)

PM1($t_{n-1}$)

R3 — CALC I($t_n$) — PM2($t_{n-1}$) — BD2

I($t_n$)

R4 — DET $t_{n1}$?

$t_{n1}$ · y

R5 — DET $t_{n2}$? · y — $t_{n2}$

$t_{n2}$

R8 — VALID $t_{n2}$ — $t_{n2}$ OK · y

$t_{n2}$ non OK · n

R6 — DEC GI(tn1, tn2) · n

y

R7 — CORR

GI(t'$_{n1}$, t'$_{n2}$)

**FIG. 5**

**FIG. 7**

**RÉFÉRENCES CITÉES DANS LA DESCRIPTION**

**Documents brevets cités dans la description**

- US 2007113207 A